(19) Europäisches Patentamt
European Patent Office
Office européen des brevets

(11) EP 0 932 650 B1

# (12) EUROPÄISCHE PATENTSCHRIFT

(45) Veröffentlichungstag und Bekanntmachung des Hinweises auf die Patenterteilung:
**19.11.2003 Patentblatt 2003/47**

(21) Anmeldenummer: **97943882.7**

(22) Anmeldetag: **23.09.1997**

(51) Int Cl.[7]: **C08L 71/12**, C08L 25/04, C08L 53/02, C08K 3/34

(86) Internationale Anmeldenummer:
**PCT/EP97/05203**

(87) Internationale Veröffentlichungsnummer:
**WO 98/016584 (23.04.1998 Gazette 1998/16)**

## (54) FLAMMWIDRIGE THERMOPLASTISCHE FORMMASSEN AUF BASIS VON POLYPHENYLENETHERN UND VINYLAROMATISCHEN POLYMEREN

NONFLAMMABLE MOULDABLE MATERIAL BASED ON POLYPHENYLENE ESTERS AND VINYL AROMATIC POLYMERS

MATIERE MOULABLE ININFLAMMABLE A BASE D'ESTERS DE POLYHENYLENE ET DE POLYMERS VINYLAROMATIQUES

(84) Benannte Vertragsstaaten:
**BE DE ES FR GB IT NL**

(30) Priorität: **15.10.1996 DE 19642491**

(43) Veröffentlichungstag der Anmeldung:
**04.08.1999 Patentblatt 1999/31**

(73) Patentinhaber: **DEMI Vertriebs- und Beteiligungsgesellschaft mbH**
**20459 Hamburg (DE)**

(72) Erfinder:
- **WEBER, Martin**
  **D-67487 Maikammer (DE)**
- **HORN, Peter**
  **D-69118 Heidelberg (DE)**
- **HECKMANN, Walter**
  **D-69469 Weinheim (DE)**
- **MÜLLER, Ulrich**
  **67435 Neustadt-Musbach (DE)**
- **GOTTSCHALK, Axel**
  **D-67435 Neustadt (DE)**

(74) Vertreter: **Patentanwälte Zellentin & Partner**
**Rubensstrasse 30**
**67061 Ludwigshafen (DE)**

(56) Entgegenhaltungen:
**EP-A- 0 132 228**
**EP-A- 0 352 042**
**EP-A- 0 550 204**
**DE-A- 2 408 531**
**GB-A- 2 290 547**
**GB-A- 2 294 934**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 932 650 B1

Printed by Jouve, 75001 PARIS (FR)

## Beschreibung

Die vorliegende Erfindung betrifft flammwidrige thermoplastische Formmassen enthaltend

A) 5 bis 97,7 Gew.-% eines Polyphenylenethers,

B) 1 bis 93,7 Gew.-% vinylaromatische Polymere,

C) 0 bis 50 Gew.-% an Schlagzähmodifiern,

D) 0,3 bis 20 Gew.-% an Schichtsilikaten, welche eine oder mehrere stickstoffhaltige Verbindungen in Mengen von 0,1 bis 50 Gew.-%, bezogen auf die Schichtsilikate, aufweisen, wobei als stickstoffhaltige Verbindungen Oxamid, Melamin oder Melamincyanurat oder Mischungen davon zum Einsatz kommen,

E) 1 bis 20 Gew.-% eines Flammschutzmittels sowie

F) 0 bis 60 Gew.-% an weiteren Zusätzen.

Weiterhin betrifft die vorliegende Erfindung die Verwendung von flammwidrigen thermoplastischen Formmassen zur Herstellung von Fasern, Folien und Formkörpern und die daraus erhältlichen Fasern, Folien und Formkörper.

Thermoplastische Polymermischungen aus Polyphenylenether (PPE) und vinylaromatischen Polymeren wie Styrolpolymerisaten sind z.B. aus den US-Patentschriften 3,383,435; 4,128,602 sowie 4,128,603 bekannt. Solche Formmassen eignen sich zur Herstellung von Formteilen, die sich im Vergleich zu schlagzähmodifizierten StyrolPolymerisaten (HIPS, High Impact Polystyrol), die nicht mit Polyphenylenethern abgemischt sind, durch eine bessere Wärmeformbeständigkeit auszeichnen. Eine ausführliche Beschreibung der Eigenschaften dieser Polymermischungen findet sich auch in L. Bottenbruch, "Technische Polymer-Blends", Kunststoff Handbuch 3/2, S. 63 ff, Hanser Verlag, München, 1993.

Ein wesentlicher Vorteil der Polymerblends aus Polyphenylenether und Styrolpolymerisaten ist darin zu sehen, daß durch Beimengung halogenfreier Zusätze, wobei insbesondere phosphorhaltige Verbindungen zu erwähnen sind, Formmassen hergestellt werden können, die flammwidrig sind und daher für viele Anwendungen im Bereich der Elektrotechnik einsetzbar werden. Für den Einsatz auf dem Gebiet der Elektrotechnik ist insbesondere die Prüfung der Flammwidrigkeit nach UL 94 (z.B. beschrieben in J. Troitzsch, "International Plastics Flammability Handbook", S. 346 ff., Hanser Verlag, München, 1990) ausschlaggebend. Bei dieser Prüfung werden vertikal befestigte Probekörper mehrfach beflammt. Dabei erhitzt sich der Probekörper sehr stark, was in vielen Fällen dazu führt, dass brennendes Polymermaterial abtropft und die unter dem Stab angebrachte Bodenwatte entzündet. Dieses unerwünschte Verhalten wird insbesondere dann beobachtet, wenn zum Erreichen kurzer Brandzeiten große Mengen an Flammschutzmittel eingesetzt werden müssen.

Das Problem des brennenden Abtropfens bei der UL 94-Prüfung ist seit langem bekannt und wird in der Technik meist durch Zusatz kleiner Mengen Teflon als Antitropfmittel gelöst (US-Patentschrift 4,107,232). Man ist jedoch aufgrund der offenkundigen Toxizität von bei der Verbrennung halogenhaltiger Substanzen freiwerdender Schadstoffe in jüngster Zeit bestrebt, den Einsatz derartiger Verbindungen in thermoplastischen Formmassen vollständig zu vermeiden.

Es ist bekannt, dass mittels Zusatz hochmolekularer bzw. ultrahochmolekularer Polymere zu thermoplastischen Formmassen aus Polyphenylenethern und Polystyrolen das brennende Abtropfen der Formmasse eingeschränkt oder vollständig unterbunden werden kann.

Als halogenfreies Antitropfmittel wird ultrahochmolekulares Polyethylen in der Europäischen Anmeldeschrift EP-A 550 204 beschrieben. Danach verhindert ein Zusatz an ultrahochmolekularem Polyethylen das Abtropfen von thermoplastischen Formmassen aus Polyphenylenethem und Styrolpolymeren vollständig. Aufgrund der Unverträglichkeit zwischen Polyethylen und Polyphenylenether bzw. Polystyrol führen jedoch schon kleine Mengen an Polyethylen zur Verschlechterung der mechanischen Eigenschaften der Formmassen, wobei insbesondere die Schädigungsarbeit $W_s$ drastisch abfällt.

Auch hochmolekulare Polystyrole führen zu einer Verbesserung des Abtropfverhaltens (EP-PS 305 764). Die Polystyrole sind durch Copolymerisation mit polyfunktionalen Monomeren, die insbesondere Aryl- oder Vinylgruppen enthalten, hergestellt. Sie werden mit Polyphenylenetherharzen gemischt um eine thermoplastische Formmasse mit hoher Schlagzähigkeit zu ergeben, der zur Erhöhung der Flammwidrigkeit zusätzlich Triarylphosphate, aromatische Bromide zugefügt werden.

Aus der US-Patentschrift 5,008,314 ist überdies bekannt, dass hochmolekulares Polystyrol die Spannungsrissbeständigkeit der Polymer-Blends aus Polyphenylenether und schlagfestem Polystyrol wesentlich verbessert.

Hochmolekulares Polystyrol wird ebenfalls zur Herstellung von Polyphenylenoxid/Polystyrol-Formmassen, die für die Blasformverarbeitung geeignet sind, verwendet (EP-A 476 366).

Allerdings erhöht das in der Regel durch radikalische Polymerisation hergestellte hochmolekulare Polystyrol die Schmelzeviskosität bei den für die Spritzgussverarbeitung relevanten Schergeschwindigkeiten in unvorteilhafter Weise. Außerdem wird die Zähigkeit der Formmassen mit steigendem Anteil an hochmolekularem Polystyrol herabgesetzt. Besonders nachteilig ist, dass sowohl bei der Verwendung von hochmolekularem Polystyrol als auch bei der Verwendung von hochmolekularem Polyethylen als Antitropfmittel mit längeren Brandzeiten bei der UL 94-Prüfung zu rechnen ist.

Die GB-A-2 290 547 beschreibt thermoplastische Formmassen, welche Polyphenylenether und ein schlagzähes Polystyrol, welches gegebenenfalls Kautschukanteile enthält besteht und als flammwidrige Mittel phosphorhaltige Verbindungen aufweist, wobei zusätzlich noch ein Styrol/-Butadien-Blockpolymer zugefügt wird.

Aus der EP-A 0 132 228 sind flammwidrige verstärkte Formmassen auf Basis von thermoplastischer Polyester bekannt, die als flammhemmenden Zusatz eine organische Chlor- oder Bromverbindung allein oder in Kombination mit Antimontrioxyd enthalten und die zur Verminderung der Tropfneigung Schichtsilikate zugefügt werden, welche gegebenenfalls Ammoniumsalze enthalten können, die mindestens eine langkettige Alkylgruppe enthalten. Das Abtropfverhalten wird weiterhin durch Zugabe von Alkalisalzen von langkettigen Carbonsäuren verhindert. Als Flammschutzmittel werden organische Halogenverbindungen oder Phosphor- oder Antimonverbindungen zugesetzt.

Der Erfindung lag daher die Aufgabe zugrunde, flammwidrige thermoplastische Formmassen, insbesondere Formmassen auf der Basis von Polyphenylenethern und vinylaromatischen Polymeren, bereitzustellen, die ein Antitropfmittel enthalten, weiches die mechanischen und rheologischen Eigenschaften sowie die Brandzeiten nach UL 94 nicht nachteilig beeinflusst.

Demgemäss wurden die eingangs definierten thermoplastischen Formmassen gefunden.

Weiterhin wurden deren Verwendung zur Herstellung von Fasern, Folien und Formkörpern sowie die hierbei erhältlichen Fasern, Folien und Formkörper gefunden.

Bevorzugt enthatten die flammwidrigen thermoplastischen Formmassen

A) 15 bis 87 Gew.-% eines Polyphenylenethers,

B) 10 bis 82 Gew.-% vinylaromatische Polymere,

C) 0,5 bis 30 Gew.-% an Schtagzähmodifiem,

D) 0,5 bis 10 Gew.-% an Schichtsilikaten, welche eine oder mehrere stickstoffhaltige Verbindungen in Mengen von 0,1 bis 50 Gew.-%, bezogen auf die Schichtsilikate, aufweisen, wobei als stickstoffhaltige Verbindungen Oxamid, Melamin oder Meiamincyanurat oder Mischungen davon zum Einsatz kommen,

E) 2 bis 15 Gew.-% eines Flammschutzmittels sowie

F) 0 bis 50 Gew.-% an weiteren Zusätzen.

Die Summe der Gew.-% der einzelnen Komponenten beträgt 100.

Als Komponente A) wird erfindungsgemäß wenigstens ein an sich bekannter Polyphenylenether verwendet. Insbesondere sind dies Verbindungen auf Basis von substituierten, insbesondere disubstituierten Polyphenylenethern, wobei der Ethersauerstoff der einen Einheit an den Benzolkern der benachbarten Einheit gebunden ist.
Vorzugsweise werden in 2- und/oder 6-Stellung zum Sauerstoffatom substituierte Potypropytenether verwendet. Als Beispiele für Substituenten sind Halogenatome, wie Chlor oder Brom, und Alkylreste mit 1 bis 4 Kohlenstoffatomen, die vorzugsweise kein $\alpha$-ständiges tertiäres Wasserstoffatom aufweisen, z.B. Methyl-Ethyl-, Propyl- oder Butylreste, zu nennen. Die Alkylreste können wiederum durch Halogenatome, wie Chlor oder Brom, oder durch eine Hydroxylgruppe substituiert sein. Weitere Beispiele möglicher Substituenten sind Alkoxyreste, vorzugsweise mit bis zu 4 Kohlenstoffatomen, wie Methoxy, Ethoxy, n-Propoxy und n-Butoxy, oder gegebenenfalls durch Halogenatome und/oder Alkylgruppen substituierte Phenylreste. Ebenfalls geeignet sind Copolymere verschiedener Phenole, beispielsweise Copolymere von 2,6-Dimethylphenol und 2,3,6-Trimethylphenol. Selbstverständlich können auch Gemische verschiedener Polyphenylenether eingesetzt werden. Die Polyphenylenether A) sind in den erfindungsgemäßen Formmassen in einer Menge von 5,0 bis 97,7, bevorzugt 15,0 bis 87 Gew.-% enthalten.

Beispiele für Polyphenylenether sind-Poly(2,6-dilauryl-1,4-phenylenether), Poly(2,6-diphenyl-1,4-phenylenether), Poly(2,6-dimethoxy-1,4-phenylenether), Poly(2,6-diethoxy-1,4-phenylenether), Poly(2-methoxy-6-ethoxy-1,4-phenylenether), Poly(2-ethyl-6-stearyloxy-1,4-phenylenether), Poly-(2,6-dichlor-1,4-phenylenether), Poly(2-methyl-6-phenyl-1,4-phenylenether), Poly(2,6-dibenzyl-1,4-phenylenether), Poly(2-ethoxy-1,4-phenylenether), Poly(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind; als besonders geeignet haben sich Poly (2,6-dialkyl-1,4-phenylenether) erwiesen, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly(2,6-dipropyl-1,4-phenylenether und Poly(2-ethyl-6-propyl-1,4-phenylenether). Besonders bevorzugt wird Poly(2,6-dimethyl-1,4-phenylenether) eingesetzt.

Unter Polyphenylenether im Sinne der Erfindung sollen auch solche verstanden werden, die mit Monomeren, wie Fumarsäure, Maleinsäure oder Maleinsäureanhydrid modifiziert sind. Derartige Polyphenylenether sind u.a. in der WO 87/00540 beschrieben.

Hinsichtlich der physikalischen Eigenschaften der Polyphenylenether können bevorzugt solche eingesetzt werden, die ein mittleres Molekulargewicht $M_w$ (Gewichtsmittel) von 8000 bis 70000, vorzugsweise 12000 bis 60000 und insbesondere 25000 bis 50000, aufweisen. Dies entspricht einer Grenzviskosität von etwa 0,18 bis 0,7, vorzugsweise von 0,25 bis 0,62 und insbesondere von 0,39 bis 0,55 dl/g, gemessen in Chloroform bei 25°C.

Die Bestimmung der Molekulargewichtsverteilung erfolgt im allgemeinen mittels Gelpermeationschromatographie (Shodex-Trennsäule 0,8 x 50 cm des Typs A 803, A 804 und A 805 mit Tetrahydrofuran (THF) als Elutionsmittel bei Raumtemperatur). Die Lösung der PPE-Proben in THF erfolgt unter Druck bei 110°C, wobei 0,16 ml einer 0,25 gew.-%igen Lösung injiziert werden. Die Detektion erfolgt im allgemeinen mit einem UV-Detektor. Die Eichung der Säulen wurde mit PPE-Proben durchgeführt, deren absolute Molekulargewichtsverteilungen durch eine GPC-Laser-Lichtstreuungskombination bestimmt wurden.

Als Komponente B) werden vinylaromatische Polymere eingesetzt. Bevorzugt sind dies schlagzähmodifizierte vinylaromatische Polymere, die mit der Komponente A) verträglich sind. Die Komponente B) ist in den erfindungsgemäßen Formmassen in Mengen von 1 bis 93,7, bevorzugt 10 bis 82 Gew.-% enthalten.

Beispiele für bevorzugte, mit Polyphenylenethern verträgliche vinylaromatische Polymere sind der Monographie von O. Olabisi, Polymer-Polymer Miscibility, Academic Press, 1979, S. 224 bis 230 und 245 zu entnehmen.

Als Homopolymerisate kommen dabei neben Polystyrol auch die Polymerisate von Styrolhomologen, wie p-Methylstyrol, α-Methylstyrol oder Divinylbenzol in syndio-, iso- oder ataktischer Form, entweder allein oder in Form einer beliebigen Mischung, in Betracht.

Die Homopolymerisate werden im allgemeinen nach den bekannten Verfahren in Masse, Lösung oder Suspension hergestellt (vgl. Ullmanns Enzyklopädie der techn. Chemie, Band 19, Seiten 265 bis 272, Verlag Chemie, Weinheim, 1980; H. Gausepohl, R. Gellert, "Polystyrol", Kunststoffhandbuch 4, S. 37 - 144, Hanser Verlag, München, 1996). Die Homopolymerisate können Gewichtsmittel des Molekulargewichts $M_w$ von 3000 bis 300000 aufweisen, die nach üblichen Methoden bestimmt werden können. Geeignetes Standard-Polystyrol wird nach dem Verfahren der anionischen bzw. radikalischen Polymerisation hergestellt.

Als Comonomere zur Herstellung von Copolymerisaten kommen z.B. Methacrylsäure, Methacrylsäurealkylester mit 1 bis 4 C-Atomen im Alkylrest, Cyclohexylmethacrylat, Isobornylmethacrylat, Acrylnitril, Methacrylnitril und Maleinsäureanhydrid sowie Maleinsäureimide, Acrylamid und Methacrylamide sowie deren N,N- oder N-alkylsubstituierten Derivate mit 1 bis 10 C-Atomen im Alkylrest in Frage. Beispiele für $C_{1-10}$-Alkylreste umfassen $C_{1-4}$-Alkylreste obiger Definition sowie n-Pentyl, n-Hexyl, n-Heptyl, n-Octyl, n-Nonyl, n-Decyl und deren verzweigte Analoga.

Die Comonomeren sind je nach ihrer chemischen Struktur in unterschiedlichen Mengen in den Styrolpolymerisaten enthalten. Entscheidend für den Gehalt an Comonomeren im Mischpolymerisat ist die Mischbarkeit des Copolymerisates mit dem Polyphenylenether A). Solche Mischungsgrenzen sind bekannt und beispielsweise in der US 4,360,618, 4,405,753 und in der Veröffentlichung von J.R. Fried, G.A. Hanna, Polymer Eng. Sci., Band 22 (1982), Seite 705 ff. beschrieben.

Beispiele für geeignete Copolymerisate sind Styrol-Acrylnitril-Copolymere, α-Methylstyrol-Acrylnitril-Copolymere, Styrol-Maleinsäureanhydrid-Copolymere, Styrol-Phenylmaleinimid-Copolymere, Styrol-Methylmethacrylat-Copolymere, Styrol-Methylmethacrylat-Acrylnitril-Copolymere, Styrol-Acrylnitril-Maleinsäureanhydrid-Copolymere, Styrol-Acrylnitril-Phenylmaleinimid-Copolymere, α-Methylstyrol-Acrylnitril-Methylmethacrylat-Copolymere, α-Methylstyrol-Acrylnitril-t-Butylmethacrylat-Copolymere, Styrol-Acrylnitril-t-Butylmethacrylat-Copolymere.

Die Herstellung der Copolymeren erfolgt nach bekannten Verfahren, die beispielsweise in Ullmanns Enzyklopädie der techn. Chemie, Band 19, Verlag Chemie, Weinheim (1980), Seite 273 ff beschrieben sind. Die Copolymerisate haben im allgemeinen Gewichtsmittel des Molekulargewichts ($M_w$) von 10000 bis 300000, die nach üblichen Methoden bestimmt werden können.

Als schlagzähmodifizierte Styrolpolymerisate eignen sich Homound Copolymerisate von vinylaromatischen Monomeren mit 8 bis 12 C-Atomen, welche in Gegenwart eines Kautschuks hergestellt werden. Der Kautschukgehalt beträgt 5 bis 25 Gew.-%, vorzugsweise 8 bis 17 Gew.-%. Eine Beschreibung der Struktur, Eigenschaften und Herstellung schlagzähmodifizierter Polystyrole findet sich in der Übersichtsliteratur (A. Echte, F. Haaf, J. Hambrecht in Angew. Chem. (Int. Ed. Engl.) 20, 344-361, (1981); sowie im Kunststoffhandbuch, Band Polystyrol, Carl Hanser Verlag (1968)).

Geeignete schlagzähmodifizierte Polystyrole sind größtenteils im Handel erhältlich und weisen eine Viskositätszahl (VZ) der Hartmatrix von 50 bis 130 ml/g (0,5 %ig in Toluol bei 23°C) auf, vorzugsweise von 60 bis 90 ml/g, besonders bevorzugt von 80 ml/g.

Bevorzugt werden Standard-Polystyrol und schlagzähes Polystyrol, deren toluollöslicher Anteil ein mittleres Molekulargewicht $M_w$ von 50000 bis 500000 g/mol aufweist und die gegebenenfalls noch mit Additiven, wie beispielsweise Mineralöl, Stabilisator, Antistatika, Flammschutzmittel oder Wachsen ausgerüstet sind.

Als monovinylaromatische Verbindungen für schlagzähmodifizierte Styrolpolymerisate kommen dabei insbesondere Styrol und die kernoder seitenkettensubstituierten Styrole in Betracht. Bevorzugte Substituenten sind Halogenatome, wie insbesondere Chlor und Brom, Hydroxyl und $C_{1-4}$-Alkyl, wie Methyl, Ethyl, n-Propyl, i-Propyl, n-Butyl und t-Butyl. Als Beispiele für diese Verbindungen seien Chlorstyrol, α-Methylstyrol, Styrol, p-Methylstyrol, Vinyltoluol und p-t-Butylstyrol genannt. Vorzugsweise wird jedoch Styrol allein verwendet.

Darüber hinaus können die eingesetzten schlagzähen Polystyrole durch die Verwendung spezieller Polybutadien-Kautschuke z.B. mit gegenüber herkömmlichen Kautschuken verändertem 1,4-cis- bzw. 1,9-trans-Anteil oder 1,2- und 1,4-Verknüpfungsanteil strukturell verändert sein. Bevorzugt sind solche schlagzähen Polystyrole mit einem Polybutadienanteil von 9 - 11 Gew.-%. Besonders bevorzugt ist dabei schlagzähes Polystyrol mit Zellteilchenmorphologie. Die mittlere Teilchengröße der Weichkomponente sollte im Bereich von 1,9 - 3,5 µm liegen. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden.

Die am häufigsten angewandten Verfahren zur Herstellung schlagzähmodifizierter Styrolpolymerisate sind die Polymerisation in Masse oder Lösung in Gegenwart eines Kautschuks, wie beispielsweise in der US-Patentschrift 2,694,692 beschrieben, und Verfahren zur Massesuspensionspolymerisation, wie beispielsweise zu finden in der US-Patentschrift 2,862,906. Selbstverständlich sind auch andere Verfahren anwendbar, sofern die gewünschte Teilchengröße der Kautschukphase eingestellt wird.

Als Schlagzähmodifier (Komponente C) werden schlagzähmodifizierende Kautschuke in Anteilen von 0 bis 50, vorzugsweise in Anteilen von 0,5 bis 30 Gew.-%, bezogen auf das Gesamtgewicht der Formmasse, eingesetzt.

Als Komponente C) können von der Komponente B) verschiedene, natürliche oder synthetische Kautschuke eingesetzt werden. Neben Naturkautschuk sind als Schlagzähmodifier z.B. Polybutadien, Polyisopren oder Mischpolymerisate des Butadiens und/ oder Isoprens mit Styrol und anderen Comonomeren, die eine Glasübergangstemperatur, bestimmt nach K.H.Illers und H.Breuer, Kolloidzeitschrift 190 (1), 16-34 (1963), von -100°C bis +25°C, vorzugsweise unter 0°C aufweisen. Außerdem können auch entsprechend hydrierte Produkte eingesetzt werden.

Bevorzugte Schlagzähmodifier C) sind Blockpolymere aus Vinylaromaten und Dienen. Schlagzähmodifier dieses Typs sind bekannt. In der DE-AS 1 932 234, der DE-AS 2 000 118 sowie der DE-OS 2 255 930 sind unterschiedlich aufgebaute vinylaromatische und Dienblöcke umfassende elastomere Blockcopolymerisate beschrieben. Die Verwendung entsprechender hydrierter Blockcopolymerisate gegebenenfalls im Gemisch mit der nicht hydrierten Vorstufe als Schlagzähmodifier ist beispielsweise beschrieben in der DE-OS 2 750 515, DE-OS 2 434 848, DE-OS 3 038 551, EP-A-0 080 666 und WO 83/01254. Auf die Offenbarung obiger Druckschriften wird hiermit ausdrücklich Bezug genommen.

Insbesondere sind Vinylaromat-Dien-Blockcopolymerisate aus Blökken einsetzbar, die eine Hartphase (Blocktyp S) und als Weichphase einen Block L/S aus Dien- und Vinylaromaten-Einheiten enthalten, der statistischen Aufbau besitzt. Der Aufbau kann dabei entlang der Kette im statistischen Mittel homogen oder inhomogen sein.

Man erhält ein solches kautschukelastisches Blockcopolymerisat dadurch, daß die Weichphase aus einem statistischen Copolymerisat eines Vinylaromaten mit einem Dien gebildet wird; statistische Copolymerisate von Vinylaromaten und Dienen erhält man durch Polymerisation in Gegenwart eines polaren Cosolvens.

Ein geeignetes Blockcopolymerisat kann z.B. durch eine der folgenden allgemeinen Formeln (1) bis (11) dargestellt werden:

(1) $(S\text{-}L/S)_n$;

(2) $(S\text{-}L/S)_n\text{-}S$;

(3) $L/S\text{-}(S\text{-}L/S)_n$;

(4) $X\text{-}[(S\text{-}L/S)_n]_m+1$

(5) X-[(L/S-S)$_n$]$_m$+1;

(6) X-[(S-L/S)$_n$-S]$_m$+1;

(7) X-[(L/S-S)$_n$-L/S]$_m$+1;

(8) Y-[(S-L/S)$_n$]$_m$+1;

(9) Y-[(L/S-S)$_n$]$_m$+1;

(10) Y-[(S-L/S)$_n$-S]$_m$+1;

(11) Y-[(L/S-S)$_n$-L/S]$_m$+1;

wobei
S für einen vinylaromatischen Block,
L/S für die Weichphase aus einem statistisch aus Dien- und vinylaromatischen Einheiten aufgebauten Block steht,
X den Rest eines n-funktionellen Initiators,
Y den Rest eines m-funktionellen Kopplungsmittels und
m,n natürliche Zahlen von 1 bis 10 bedeuten.

Bevorzugt ist ein Blockcopolymerisat der allgemeinen Formeln S-L/S-S, X-[-L/S-S]$_2$ und Y-[-L/S-S]$_2$ (Bedeutung der Abkürzungen wie vorstehend) und besonders bevorzugt ein Blockcopolymerisat, dessen Weichphase unterteilt ist in Blöcke

(12) (L/S)$_a$-(L/S)$_b$;

(13) (L/S)$_a$-(L/S)$_b$-(L/S)$_a$;

(14) (L/S)$_a$-(L/S)$_b$-(L/S)$_c$;

wobei die Indices a, b, c für unterschiedliche Strukturen in dem Sinne stehen, daß das Vinylaromat/Dien-Verhältnis in den einzelnen Blöcken L/S unterschiedlich ist oder sich innerhalb eines Blocks in den Grenzen (L/S)$_a$(L/S)$_b$ kontinuierlich ändert, wobei die Glasübergangstemperatur $T_g$ jedes Teilblocks unter 25°C liegt.

Ein Blockcopolymerisat, das mehrere Blöcke L/S und/oder S mit unterschiedlicher Molmasse je Molekül aufweist, ist ebenfalls bevorzugt.

Ebenso kann an die Stelle eines ausschließlich aus vinylaromatischen Einheiten aufgebauten Blocks S ein Block L treten, da es insgesamt lediglich darauf ankommt, daß ein kautschukelastisches Blockcopolymerisat gebildet wird. Solche Copolymerisate können z.B. eine der Strukturen (15) bis (18) haben

(15) L-(L/S)

(16) (L/S)-L-(L/S)

(17) (L/S)$_1$-L-(L/S)$_2$

(18) L-$(L/S)_1$-$(L/S)_2$.

Bevorzugte Vinylaromaten sind Styrol, o-Methylstyrol, Vinyltoluol oder Mischungen dieser Verbindungen. Bevorzugte Diene sind Butadien, Isopren, Piperylen, 1-Phenylbutadien oder Mischungen dieser Verbindungen. Eine besonders bevorzugte Monomerkombination ist Butadien und Styrol.

Besonders bevorzugt sind die Weichblöcke aus 25 bis 75 Gew.-% Styrol und 25 bis 75 Gew.-% Butadien aufgebaut. Insbesondere bevorzugt sind weichblöcke, die einen Butadienanteil von 34 bis 69 Gew.-% und einen Styrolanteil von 31 bis 66 Gew.-% enthalten.

Der Gewichtsanteil des Diens im gesamten Blockcopolymer liegt im Falle der Monomerkombination Styrol/Butadien bei 15 bis 65 Gew.-%, derjenige der vinylaromatischen Komponente entsprechend bei 85 bis 35 Gew.-%. Besonders bevorzugt sind Butadien-Styrol-Blockcopolymere mit einer Monomerzusammensetzung aus 25 bis 60 Gew.-% Dien und 75 bis 40 Gew.-% an vinylaromatischer Verbindung.

Die Blockcopolymere sind durch anionische Polymerisation in einem unpolaren Lösungsmittel unter Zusatz eines polaren Cosolvens erhältlich. Es besteht dabei die Vorstellung, daß das Cosolvens gegenüber dem Metallkation als Lewis-Base wirkt. Als Lösungsmittel werden bevorzugt aliphatische Kohlenwasserstoffe, wie Cyclohexan oder Methylcyclohexan, verwendet. Als Lewis-Basen werden polare aprotische Verbindungen, wie Ether und tertiäre Amine, bevorzugt. Beispiele für besonders effektive Ether sind Tetrahydrofuran und aliphatische Polyether wie Diethylenglycoldimethylether. Als tertiäre Amine sind Tributylamin und Pyridin zu nennen. Das polare Cosolvens wird dem unpolaren Lösungsmittel in einer geringen Menge, z.B. von 0,5 bis 5 Vol.-%, zugesetzt. Besonders bevorzugt ist Tetrahydrofuran in einer Menge von 0,1 bis 0,3 Vol.-%. Erfahrungsgemäß kommt man mit einer Menge von 0,2 Vol.-% in den meisten Fällen aus.

Durch die Dosierung und Struktur der Lewis-Base werden die Copolymerisationsparameter und der Anteil an 1,2- bzw. 1,4-Verknüpfungen der Dieneinheiten bestimmt. Geeignete Polymere haben z.B. einen Anteil von 15 bis 40 % an 1,2-Verknüpfungen und 85 bis 60 % an 1,4-Verknüpfungen bezogen auf alle Dieneinheiten.

Die anionische Polymerisation wird mittels metallorganischer Verbindungen initiiert. Bevorzugt sind Verbindungen der Alkalimetalle, besonders des Lithiums. Beispiele für Initiatoren sind Methyllithium, Ethyllithium, Propyllithium, n-Butyllithium, s-Butyllithium und t-Butyllithium. Die metallorganische Verbindung wird als Lösung in einem chemisch indifferenten (inerten) Kohlenwasserstoff zugesetzt. Die Dosierung richtet sich nach dem angestrebten Molekulargewicht des Polymers, liegt aber in der Regel im Bereich von 0,002 bis 5 Mol%, wenn man sie auf die Monomeren bezieht.

Die Polymerisationstemperatur kann 0 bis 130°C betragen. Bevorzugt wird der Temperaturbereich von 30 bis 100°C.

Für die mechanischen Eigenschaften ist der Volumenanteil der Weichphase im Festkörper von entscheidender Bedeutung. Erfahrungsgemäß liegt der Volumenanteil der aus Dien- und vinylaromatischen Sequenzen aufgebauten Weichphase bei 60 bis 95, bevorzugt bei 70 bis 90 und besonders bevorzugt bei 80 bis 90 Vol.-%. Die aus den vinylaromatischen Monomeren entstandenen Blöcke S bilden die Hartphase, deren Volumenanteil entsprechend 1 bis 40, bevorzugt 10 bis 30 und besonders bevorzugt 10 bis 20 Vol.-% ausmacht.

Meßbar ist der Volumenanteil der beiden Phasen mittels kontrastierter Elektronenmikroskopie oder Festkörper-NMR-Spektroskopie. Der Anteil der vinylaromatischen Blöcke läßt sich nach Osmiumabbau des Polydienanteils durch Fällen und Auswiegen bestimmen. Das künftige Phasenverhältnis eines Polymers läßt sich auch aus den eingesetzten Monomermengen berechnen, wenn man jedesmal vollständig auspolymerisieren läßt.

Eindeutig definiert wird das Blockcopolymere durch den Quotienten aus dem Volumenanteil in Prozent der aus den L/S-Blöcken gebildeten Weichphase und dem Anteil an Dieneinheiten in der Weichphase, der für die Kombination Styrol/Butadien zwischen 25 und 70 Gew.-% liegt.

Durch den statistischen Einbau der vinylaromatischen Verbindungen in den Weichblock des Blockcopolymeren und die Verwendung von Lewis-Basen während der Polymerisation wird die Glasübergangstemperatur ($T_g$) beeinflußt. Die Glasübergangstemperatur des gesamten Copolymers beträgt vorzugsweise -50°C bis +25°C, bevorzugt weniger als 0°C.

Das Molekulargewicht des Blocks S beträgt vorzugsweise 1000 bis 200000, insbesondere 3000 und 80000 [g/mol]. Innerhalb eines Moleküls können S-Blöcke unterschiedliche Molmasse haben.

Das Molekulargewicht des Blocks L/S beträgt üblicherweise von 2000 bis 250000 [g/mol]; bevorzugt sind Werte von 5000 bis 150000 [g/mol].

Auch Block L/S kann wie Block S innerhalb eines Moleküls unterschiedliche Molekulargewichtswerte einnehmen.

Das Kupplungszentrum X wird durch die Umsetzung der lebenden anionischen Kettenenden mit einem mindestens bifunktionellen Kupplungsagens gebildet. Beispiele für derartige Verbindungen sind in den US-PSen 3,985,830; 3,280,084; 3,637,554 und 4,091,053 zu finden. Bevorzugt werden z.B. epoxidierte Glyceride wie epoxidiertes Leinsamenöl oder Sojaöl eingesetzt; geeignet ist auch Divinylbenzol. Speziell für die Dimerisierung sind Dichlordialkylsilane, Dialdehyde, wie Terephthalaldehyd, und Ester, wie Ethylformiat oder -benzoat, geeignet.

Bevorzugte Polymerstrukturen sind S-L/S-S, X-[-L/S-S]$_2$ und Y-[-L/S-S]$_2$, wobei der statistische Block L/S selbst wieder in Blöcke L1/S1-L2/S2-L3/S3-... unterteilt sein kann. Bevorzugt besteht der statistische Block aus 2 bis 15 statistischen Teilblöcken, besonders bevorzugt aus 3 bis 10 Teilblöcken. Die Aufteilung des statistischen Blocks L/ S in möglichst viele Teilblöcke Ln/Sn bietet den entscheidenden Vorteil, daß auch bei einem Zusammensetzungsgradienten innerhalb eines Teilblocks Ln/Sn, wie er sich in der anionischen Polymerisation unter praktischen Bedingungen nur schwer vermeiden läßt, sich der L/S-Block insgesamt wie ein nahezu perfektes statistisches Polymer verhält. Es bietet sich deshalb an, weniger als die theoretische Menge an Lewis-Base zuzusetzen, was den Anteil 1,4-Dienverknüpfungen erhöht, die Glastemperatur $T_g$ absenkt und die Vernetzungsanfälligkeit des Polymeren mindert. Ein größerer oder ein kleinerer Anteil der Teilblöcke kann mit einem hohen Dienanteil ausgestattet werden. Dies bewirkt, daß das Polymer auch unterhalb der Glastemperatur der überwiegenden L/S-Blöcke eine Restzähigkeit behält und nicht vollständig versprödet.

Alle oben angegebenen Gewichts- und Volumenangaben beziehen sich auf die Monomerkombination Butadien/Styrol. Diese Angaben können jedoch ohne weiteres auf andere zu Styrol und Butadien technisch äquivalente Monomere umgerechnet werden.

Die Blockcopolymeren können dadurch aufgearbeitet werden, daß die Carbanionen mit einem Alkohol, wie Isopropanol, protoniert werden, die Reaktionsmischung angesäuert wird, z.B. mit einem Gemisch aus $CO_2$ und Wasser und das Lösungsmittel entfernt wird. Die Blockcopolymeren können Oxidationsinhibitoren und Antiblockmittel enthalten.

Auch Mischungen obiger Schlagzähmodifier sind einsetzbar.

Als Komponente D) - dem Antitropfmittel - werden Schichtsilikate mit einem Anteil an stickstoffhaltigen Verbindungen eingesetzt. Der Anteil an Schichtsilikaten liegt im Bereich von 0,3 bis 20 Gew.-%, besonders bevorzugt ist eine Menge von 0,5 bis 10 Gew.-%, bezogen auf das Gesamtgewicht der Formmasse. Bezogen auf den Anteil an Schichtsilikaten werden diesen 0,1 bis 50 Gew.-% stickstoffhaltige Verbindungen zugegeben, bevorzugt liegt der Anteil bei 0,1 bis 20, insbesondere bei 0,2 bis 15 Gew.-%. Als Schichtsilikate kommen natürliche und synthetische Silikate in unbehandelter und säurebehandelter Form in Frage. Geeignet sind z.B. die natürlichen Natriumsilikate Natronsilit, Makatit, Magadiit, Kenyait, Kanemit, Revolit und Grumantit. Besonders geeignet sind Bleicherden aus tonartigen Schichtsilikaten, wie Talk, Glimmer, Kaolinit und Bentonit. Besonders bevorzugt sind die zu den Bleicherden zu zählenden wasserhaltigen Aluminium- und/oder Magnesiumsilikate. Diese enthalten als wesentlichen Bestandteil zumeist Montmorillonit. Hierunter fällt beispielsweise die Bleicherde "Catalyst K 10" der Firme Süd-Chemie, München, bei der es sich um eine durch Behandlung mit Salzsäure modifizierte mineralische Verbindung auf der Grundlage von Calcium-Montmorillonit, einem Aluminiumschichtsilikat der Smektidgruppe, handelt. Ebenfalls geeignet sind die unter die Marke TONSIL® der Firma Süd-Chemie fallenden, durch Säurebehandlung aus natürlichen Bentoniten gewonnenen Schichtsilikate. Eine Beschreibung geeigneter Silikate findet sich z.B. bei G. Lagaly, Progr. Colloid & Polym. Sci. 95, S. 61 - 72 (1994) und den dort aufgeführten Literaturstellen. Dem/den Schichtsilikat(en) haben des weiteren eine oder mehrere stickstoffhaltige Verbindungen beigemengt zu sein. Die organischen Stickstoffbasen werden dabei zumeist infolge der gesteigerten Acidität des interlamellaren Wassers in die Schichtstruktur eingelagert. Als bevorzugte Stickstoffverbindungen werden Oxamid (Oxalsäurediamid), Melamin (2,4,6-Triamino-1,3,5-triazin) und Melamincyanurat verwendet. Sie können entweder einzeln oder in Kombination den Schichtsilikaten beigemengt werden. Besonders bevorzugt ist der Zusatz von Oxamid.

Das Antitropfmittel wird in bevorzugter Weise dadurch erhalten, daß man die stickstoffhaltigen Verbindungen in die Schichtsilikate mittels handelsüblicher Mischaggregate einarbeitet. Als für diesen Zweck besonders geeignet haben sich z.B. Kugelmühlen erwiesen. Die Herstellung des Antitropfmittels wird vorteilhafterweise bei Raumtemperatur vorgenommen. Die Mischzeit beträgt bis 3 Stunden.

Die Komponente E) liegt in den erfindungsgemäßen Formmassen in Anteilen von 1 bis 20 Gew.-%, vorzugsweise von 2 bis 15 Gew.-% vor. Geeignet sind z.B. phosphororganische Verbindungen der allgemeinen Formel I, II und III:

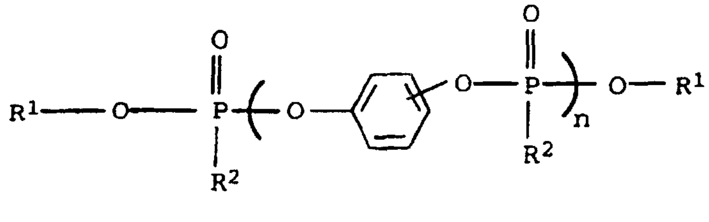

(I)

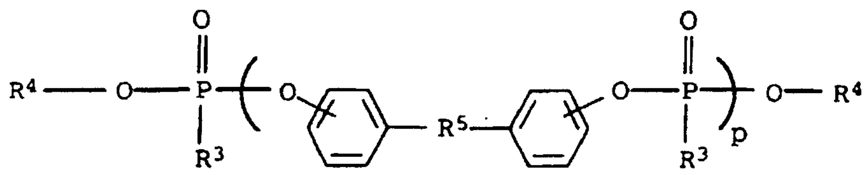

(II)

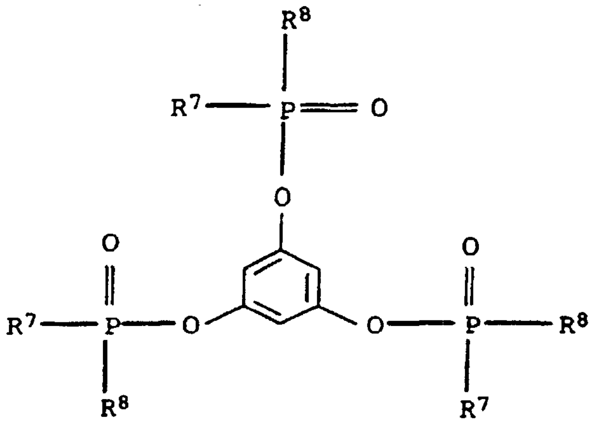

(III)

worin

- $R^1$ und $R^4$ unabhängig voneinander für gegebenenfalls substituiertes Alkyl, Cycloalkyl oder Aryl stehen;
- $R^2$, $R^3$, $R^7$ und $R^8$ unabhängig voneinander für gegebenenfalls substituiertes Alkyl, Cycloalkyl, Aryl, Alkoxy oder Aryloxy stehen,
- $R^5$ für Alkylen, $-SO_2-$, -CO-, -N=N- oder $-(R^6)P(O)$-steht, worin
- $R^6$ für gegebenenfalls substituiertes Alkyl, Cycloalkyl, Aryl oder Alkylaryl steht und
- n und p unabhängig voneinander einen Wert von 1 bis 30 einnehmen.

Geeignete Substituenten in Verbindungen der Formeln (I), (II) und (III) sind Cyano, Hydroxy, Alkyl und Halogen, wie F, Cl, Br, J.

Bevorzugte Alkylreste in Verbindungen der Formeln (I), (II) und (III) sind $C_1$-$C_{20}$-Alkyl, insbesondere $C_1$-$C_{12}$-Alkyl, wie Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und Cyanoethyl.

Bevorzugte Arylreste in Verbindungen der Formeln (I), (II) und (III) sind Phenyl und Naphthyl sowie einfach oder mehrfach substituierte Reste, wie Tolyl, xylyl, Mesityl und Cresyl.

Bevorzugte Alkylarylreste in Verbindungen der Formeln (I), (II) und (III) sind $C_1$-$C_{2o}$-Alkylaryl- und insbesondere $C_1$-$C_{12}$-Alkylarylreste, wobei Alkylteil und Arylteil wie oben definiert sind.

Bevorzugte Cycloalkylgruppen in Verbindungen der Formeln (I), (II) und (III) umfassen $C_3$-$C_{10}$-Cycloalkylgruppen, wie Cyclobutyl, Cyclopentyl, Cyclohexyl und Cycloheptyl.

Bevorzugte Alkoxyreste in Verbindungen der Formeln (I), (II) und (III) sind $C_1$-$C_{20}$-Alkoxyreste, wobei der $C_1$-$C_{20}$-Alkylteil wie oben definiert ist.

Bevorzugte Aryloxyreste in Verbindungen der Formeln (I), (II) und (III) sind auch solche, worin der Arylanteil wie oben definiert ist.

Bevorzugte Alkylenreste in Verbindung der Formeln (I), (II) und (III) sind $C_1$-$C_6$-Alkylenreste, wie Methylen, Ethylen, Propylen und Hexylen.

Dabei ist zu beachten, daß die technisch verfügbaren Produkte Mischungen verschiedener Oligomere bzw. Isomere darstellen können.

Die Herstellung von Phosphorsäureestern ist beschrieben in Houben-Weyl, "Methoden der organischen Chemie" Bd. XII/2, Thieme Verlag 1972. Bevorzugt werden die Verbindungen E) durch Umesterung unter Basenkatalyse

bzw. durch Umsetzung von Phosphoroxichlorid mit Phenolen unter Mg- bzw. Al-Chlorid-Katalyse erhalten.

Bevorzugte Produkte der Formel (I) sind Hydrochinon- oder Resorcindiphenyldiphosphat. Bevorzugte Produkte der Formel (II) werden erhalten durch Reaktion von Bisphenol A bzw. S mit Triphenylphosphat unter Basenkatalyse.

Als Komponente E) können die erfindungsgemäßen Formmassen auch die folgenden Verbindungen einzeln oder im Gemisch enthalten:

(1) Phosphinoxide der allgemeinen Formel (IV)

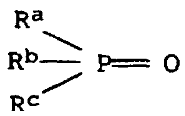

(IV)

wobei $R^a$, $R^b$ und $R^c$ gleich oder verschieden sind und ausgewählt sind unter einem Wasserstoffatom, geradkettigen oder verzweigten, gegebenenfalls substituierten Alkyl-, Aryl-, Alkylaryl- oder Cycloalkylgruppen mit bis zu 40 Kohlenstoffatomen.

Bevorzugte Alkylreste sind hierbei $C_1$-$C_{20}$-Alkyl, insbesondere $C_1$-$C_{12}$-Alkyl, wie Methyl, Ethyl, n-Propyl, n-Butyl, Neopentyl, n-Hexyl, n-Octyl, n-Nonyl, n-Dodecyl, 2-Ethylhexyl, 3,5,5-Trimethylhexyl und substituierte Alkylreste, wie Cyanoethyl.

Bevorzugte Arylreste sind Phenyl und Naphthyl sowie einfach oder mehrfach substituierte Reste, wie Tolyl, Xylyl, Mesityl und Cresyl.

Bevorzugte Alkylarylreste sind $C_1$-$C_{20}$-Alkylaryl- und insbesondere $C_1$-$C_{12}$-Alkylarylreste, wobei Alkylteil und Arylteil wie oben definiert sind.

Bevorzugte Cycloalkylgruppen umfassen $C_3$-$C_{10}$-Cycloalkylgruppen, wie Cyclobutyl, Cyclopentyl, Cyclohexyl und Cycloheptyl.

Geeignete Substituenten sind Cyano, Hydroxy, $C_{1}$-$_{4}$-Alkyl und Halogen, wie F, Cl, Br, J.

(2) Phosphate der allgemeinen Formel (V)

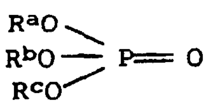

(V)

in der die Substituenten $R^a$, $R^b$ und $R^c$ gleich oder verschieden sind und die oben angegebenen Bedeutungen besitzen.

Beispiele für Phosphinoxide der Formel IV sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)- phosphinoxid, Tris-(n-octyl)-phosphinoxid, Tris-(cyanoethyl)- phosphinoxid, Benzylbis-(cyclohexyl)-phosphinoxid, Benzylbisphenylphosphinoxid, Phenylbis-(n-hexyl)-phosphinoxid. Besonders bevorzugt eingesetzt werden Triphenylphosphinoxid, Tricyclohexylphosphinoxid, Tris- (n-octyl)- phosphinoxid und Tris-(cyanoethyl)-phosphinoxid.

Als Phosphate der Formel V kommen vor allem alkyl- und arylsubstituierte Phosphate in Betracht. Beispiele sind Phenylbisdodecylphosphat, Phenylbisneopentylphosphat, Phenylethylhydrogenphosphat, Phenyl-bis-(3,5,5-trimethylhexyl)phosphat, Ethyldiphenylphosphat, Bis- (2-ethylhexyl)-p-tolylphosphat, Tritolylphosphat, Trixylylphosphat, Trimesitylphosphat, Bis-(2-ethylhexyl)-phenylphosphat, Tris-(nonylphenyl)-phosphat, Bis-(dodecyl)-p-tolylphosphat, Tricresylphosphat, Triphenylphosphat, Di-butylphenylphosphat, p-Tolyl-bis-(2,5,5-trimethylhexyl)-phosphat, 2-Ethylhexyldiphenylphosphat. Besonders geeignet sind Phosphorverbindungen, bei denen jedes R ein Aryl-Rest ist. Ganz besonders geeignet sind dabei Triphenylphosphat, Trixylylphosphat sowie Trimesitylphosphat. Des weiteren können auch cyclische Phosphate eingesetzt werden. Besonders geeignet ist Diphenylpentaerythritol-diphosphat.

Besonders bevorzugt sind Mischungen folgender Phosphinoxide und Phosphate: Triphenylphosphinoxid-Triphenylphosphat oder Trixylylphosphat, Tricyclohexylphosphinoxid und Triphenylphosphat, Tris-(cyanoethyl)phosphinoxid und Triphenylphosphat, Tris-(n-octyl)-phosphinoxid und Triphenylphosphat. Es können auch Mischungen aus mehreren Phosphinoxiden und Phosphaten eingesetzt werden, wie etwa die Mischung Triphenylphosphinoxid, Triphenylphosphat, Trixylylphosphat.

Des weiteren können Mischungen der höheren Phosphate und Monophosphate bzw. Monophosphinoxide in

jedem Mischungsverhältnis eingesetzt werden.

Als Zusatzstoffe F) kommen in Betracht Hitze- und Lichtstabilisatoren, Gleit- und Entformungsmittel, Färbemittel, wie Farbstoffe und Pigmente, in üblichen Mengen. Weitere Zusatzstoffe sind Verstärkungsmittel, wie Glasfasern, Asbestfasern, Kohlenstoffasern, aromatische Polyamidfasern und/oder Füllstoffe, Gipsfasern, synthetische Kalziumsilikate, Kaolin, kalziumiertes Kaolin, Wollastonit, Talkum und Kreide. Auch niedermolekulare oder hochmolekulare Polymere kommen als Zusatzstoffe in Betracht, wobei Polyethylenwachs als Gleitmittel besonders bevorzugt ist. Der Anteil dieser Zusätze beträgt im allgemeinen nicht mehr als 60, vorzugsweise nicht mehr als 50 und insbesondere nicht mehr als 30 Gew.-%, bezogen auf das Gesamtgewicht der Komponenten.

Die Herstellung der erfindungsgemäßen Formmassen erfolgt zweckmäßigerweise durch Mischen der Komponenten bei Temperaturen im Bereich von 250 bis 300°C in üblichen Mischvorrichtungen, wie Knetern, Banbury-Mischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls mehrere Komponenten vorgemischt sein oder es können auch alle Komponenten gemeinsam gemischt werden.

Aus den erfindungsgemäßen Formmassen lassen sich z.B. durch Spritzguß oder Extrusion Formkörper herstellten, die flammwidrig sind, bei der Brandprüfung nach UL 94 nicht zum brennenden Abtropfen neigen und auch noch nach Wärmelagerung gute Eigenfarbe aufweisen.

Die erfindungsgemäßen Formmassen eignen sich sehr gut zur Herstellung von Formteilen aller Art, z.B. durch Spritzguß oder Extrusion. Sie können weiterhin zur Herstellung von Folien und Halbzeug im Tiefzieh- oder Blasverfahren verwendet werden.

Mit den erfindungsgemäßen thermoplastischen Formmassen gelingt eine VO-Klassifizierung gemäß der Prüfung nach UL 94. Brennendes Abtropfen tritt nur noch sehr eingeschränkt oder überhaupt nicht mehr auf. verlängerte Brandzeiten sind ebenfalls nicht zu beobachten. Darüber hinaus verlieren die erfindungsgemäßen thermoplastischen Formmasssen durch den Zusatz von Schichtsilikaten, welche stickstoffhaltige Verbindungen enthalten, nicht die eingangs geschilderten vorteilhaften rheologischen und mechanischen Eigenschaften von Polyphenylenether und vinylaromatische Polymere enthaltenden Formmassen. Da der beschriebene Zusatz an Schichtsilikaten zu keiner Verfärbung der Polymermasse führt, können auch helle Einfärbungen vorgenommen werden. Diese verfügen über eine gute Farbstabilität. Demgemäß besitzen die geschilderten thermoplastischen Formmassen eine beträchtliche Einsatzbreite.

Beispiele:

Es wurden die folgenden Komponenten eingesetzt:

Komponente A)

Poly-2,6-dimethyl-1,4-phenylenether mit einem mittleren Molekulargewicht ($M_w$) von 40000 g/mol.

Komponente $B_1$)

Schlagfestes Polystyrol mit 9 Gew.-% Polybutadien und Zellteilchenmorphologie, mittlere Teilchengröße der Weichkomponente von 1,9 µm. Die Viskositätszahl der Hartmatrix beträgt 80 ml/g (0,5 gew.-%ig in Toluol bei 23°C).

Komponente $B_2$)

Schlagfestes Polystyrol mit 11 Gew.-% Polybutadien und Zellteilchenmorphologie, mittlere Teilchengröße der Weichkomponente von 3,5 µm. Die Viskositätszahl der Hartmatrix beträgt 80 ml/g (0,5 gew.-%ig in Toluol bei 23°C).

Komponente C)

Ein Ethylen-Butylen-Styrol-Blockcopolymer mit 29 Gew.-% Polystyrol (Kraton® G 1650 der Fa. Shell).

Komponente D)

D1: Bleicherde Catalyst K 10 mit 2 Gew.-% Oxamid,

D2: Bleicherde Catalyst K 10 mit 2 Gew.-% Melamin,

D3: Bleicherde Catalyst K 10 mit 2 Gew.-% Melamincyanurat.

Die Komponenten D1 bis D3 wurden durch Umsetzung von Catalyst K 10 (Firma Süd-Chemie) mit jeweils 2 Gew.-% Oxamid, Melamin bzw. Melamincyanurat in einer Kugelmühle bei 25°C für 3 h erhalten.

Komponente E)

Triphenylphosphat, Disflamoll® TP (Bayer AG), Resorcinoldiphosphat, Fyrolflex® RDP (Akzo).

Herstellung der thermoplastischen Formmassen

Die Komponenten A) bis E) wurden auf einem Zweiwellenextruder (ZSK 30 der Fa. Werner & Pfleiderer) bei 280°C gemischt, als Strang ausgetragen, gekühlt und granuliert. Das getrocknete Granulat wurde bei 260°C zu Rundscheiben und Flachstäben für die UL 94-Prüfung verarbeitet.

Die Schädigungsarbeit $W_S$ wurde nach DIN 53443 bei 23°C bestimmt.

Die Wärmeformbeständigkeit der Proben wurde mittels der Vicat-Erweichungstemperatur, bestimmt nach DIN 53460, mit einer Kraft von 49,05 N und einer Temperatursteigerung von 50 K/h, an Normkleinstäben ermittelt.

Die Farbstabilität wurde nach Wärmelagerung (14 Tage, 90°C) an Rundscheiben visuell begutachtet (hell: 1, dunkel: 5).

Die Zusammensetzung der Formmassen und die Ergebnisse der Prüfungen sind der nachfolgenden Tabelle zu entnehmen.

Tabelle 1:

| Formmasse Nr. | V1*) | 1 | 2 | 3 | 4 | 5 | 6 | V2*) | V3*) |
|---|---|---|---|---|---|---|---|---|---|
| Komponente [Gew.-%] | | | | | | | | | |
| A | 40 | 39,1 | 38,3 | 39,1 | 39,1 | 39,1 | 39,1 | 39,1 | 39,9 |
| B1 | 47 | 46,0 | 44,8 | 46 | 46,0 | 46,0 | 43,7 | 46 | 46,9 |
| B2 | - | - | - | - | - | - | 2,3 | - | - |
| $C_1$ | 3 | 2,9 | 2,9 | 2,9 | 2,9 | 2,9 | 2,9 | 2,9 | 3 |
| $D_1$ | - | 2 | 2 | - | - | - | 2 | - | - |
| $D_2$ | - | - | - | 2 | - | - | - | - | - |
| $D_3$ | - | - | - | - | 2 | 2 | - | - | - |
| Bleicherde | - | - | - | - | - | - | - | 2 | - |
| Oxamid | - | - | - | - | - | - | - | - | 0,2 |
| $E_1$ | 10 | 10 | 12 | 10 | 10 | - | 10 | 10 | 10 |
| $E_2$ | - | - | - | - | - | 10 | - | - | - |
| $W_s$ [Nm] | 34 | 31 | 32 | 29 | 27 | 28 | 35 | 33 | 34 |
| Vicat B [°C) | 111 | 112 | 107 | 111 | 112 | 115 | 111 | 111 | 111 |
| UL 94 | V-2 | V-1 | V-0 | V-1 | V-1 | V-1 | V-1 | V-2 | V-2 |
| (Stäbe abgetropft) | (5) | (0) | (0) | (0) | (0) | (0) | (0) | (5) | (5) |
| Brandzeit [s] | 78 | 64 | 32 | 72 | 75 | 84 | 76 | 98 | 85 |
| Farbe der Rundscheiben nach Lagerung | 3 | 2 | 2 | 2 | 2 | 2 | 2 | 2 | 3 |

*) V: Vergleichsversuche

## Patentansprüche

1. Flammwidrige thermoplastische Formmassen, enthaltend

A) 5 bis 97,7 Gew.-% eines Polyphenylenethers,

B) 1 bis 93,7 Gew.-% vinylaromatische Polymere,

C) 0 bis 50 Gew.-% an Schlagzähmodifiern,

D) 0,3 bis 20 Gew.-% an Schichtsilikaten, welche eine oder mehrere stickstoffhaltige Verbindungen in Mengen von 0,1 bis 50 Gew.-%, bezogen auf die Schichtsilikate, aufweisen, wobei als stickstoffhaltige Verbindungen Oxamid, Melamin oder Melamincyanurat oder Mischungen davon zum Einsatz kommen.

E) 1 bis 20 Gew.-% eines Flammschutzmittels sowie

F) 0 bis 60 Gew.-% an weiteren Zusätzen.

**2.** Flammwidrige thermoplastische Formmassen nach Anspruch 1, **dadurch gekennzeichnet, dass** sie die

Komponente A) in einer Menge von 15 bis 87 Gew.-%,
Komponente B) in einer Menge von 10 bis 82 Gew.-%,
Komponente C) in einer Menge von 0,5 bis 30 Gew.-%,
Komponente D) in einer Menge von 0,5 bis 10 Gew.-%,
Komponente E) in einer Menge von 2 bis 15 Gew.-%,
Komponente F) in einer Menge von 0 bis 50 Gew.-%

enthalten.

**3.** Flammwidrige thermoplastische Formmassen nach den Ansprüchen 1 bis 2, **dadurch gekennzeichnet, dass** als Komponente A) ein Poly(2,6-dialkyl-1,4-phenylenether) eingesetzt wird.

**4.** Flammwidrige thermoplastische Formmassen nach den Ansprüchen 1 bis 3, **dadurch gekennzeichnet, dass** der Polyphenylenether A) ein mittleres Molekulargewicht ($M_w$)im Bereich von 25000 bis 50000 g/mol aufweist.

**5.** Flammwidrige thermoplastische Formmassen nach den Ansprüchen 1 bis 4, **dadurch gekennzeichnet, dass** als Komponente B) schlagfestes Polystyrol mit 8 bis 17 Gew.-% Polybutadien eingesetzt wird.

**6.** Flammwidrige thermoplastische Formmassen nach den Ansprüchen 1 bis 5, **dadurch gekennzeichnet, dass** als Schichtsilikat in der Komponente D) Bleicherde eingesetzt wird.

**7.** Flammwidrige thermoplastische Formmassen nach den Ansprüchen 1 bis 6, **dadurch gekennzeichnet, dass** der Anteil an stickstoffhaitigen Verbindungen, bezogen auf die Komponente D), 0,1 bis 20 Gew.-% beträgt.

**8.** Verwendung der Formmassen gemäß den Ansprüchen 1 bis 7 zur Herstellung von flammwidrigen Formkörpern, Fasern und Folien.

**9.** Formkörper, Fasern und Folien, erhältlich aus den flammwidrigen thermoplastischen Formmassen gemäß den Ansprüchen 1 bis 7 als wesentliche Komponente.

**Claims**

**1.** Flame-resistant thermoplastic moulding masses containing

A) 5 to 97.7 wt.% of a polyphenylene ether,
B) 1 to 93.7 wt.% of vinyl aromatic polymers,
C) 0 to 50 wt.% of impact resistant modifiers,
D) 0.3 to 20 wt.% of lamellar silicates which have one or more nitrogen-containing compounds in amounts of 0.1 to 50 wt.%, referred to the lamellar silicates, whereby as nitrogen-containing compounds there are used oxamide, melamine or melamine cyanurate or mixture thereof,
E) 1 to 20 wt.% of a flame-protection agent, as well as

F) 0 to 60 wt.% of further additives.

2. Flame-resistant thermoplastic moulding masses according to claim 1, **characterised in that** they contain the

component A) in an amount of 15 to 87 wt.%,
component B) in an amount of 10 to 82 wt.%,
component C) in an amount of 0.5 to 30 wt.%,
component D) in an amount of 0.5 to 10 wt.%,
component E) in an amount of 2 to 15 wt.%,
component F) in an amount of 0 to 50 wt.%.

3. Flame-resistent thermoplastic moulding masses according to claims 1 to 2, **characterised in that**, as component A), a poly-(2,6-dialkyl-1,4-phenylene ether) is used.

4. Flame-resistant thermoplastic moulding masses according to claims 1 to 3, **characterised in that** the polyphenylene ether A) has an average molecular weight ($M_W$) in the range of 25000 to 50000 g/mol.

5. Flame-resistant thermoplastic moulding masses according to claims 1 to 4, **characterised in that**, as compound B), there is used an impact-resistant polystyrene with 8 to 17 wt.% polybutadiene.

6. Flame-resisstant thermoplastic moulding masses according to claims 1 to 5, **characterised in that**, as lamellar silicate in the component D), there is used fuller's earth.

7. Flame-resistant thermoplastic moulding masses according to claims 1 to 6, **characterised in that** the proportion of nitrogen-containing compounds, referred to the components D), amounts to 0.1 to 20 wt,%.

8. Use of moulding masses according to claims 1 to 7 for the production of flame-resistant formed bodies, fibres and foils.

9. Formed bodies, fibres and foils obtainable from the flame-resistant thermoplastic moulding masses according to claims 1 to 7 as essential components.

**Revendications**

1. Masses moulables thermoplastiques ignifuges, contenant

A) 5 à 97,7% en poids d'un polyphénylène-éther,
B) 1 à 93,7% en poids de polymères vinylaromatiques,
C) 0 à 50% en poids d'agents modifiant la résistance aux chocs,
D) 0,3 à 20% en poids de phyllosilicates, lesquels présentent un ou plusieurs composés azotés en des quantités de 0,1 à 50% en poids par rapport aux phyllosilicates, l'oxamide, la mélamine ou le cyanurate de mélamine, ou des mélanges de ceux-ci étant mis en oeuvre en tant que composés azotés.
E) 1 à 20% en poids d'un ignifugeant ainsi que
F) 0 à 60% en poids d'additif supplémentaire.

2. Masses moulables thermoplastiques ignifuges selon la revendication 1, **caractérisées en ce qu'**elles contiennent

le composé A) en une quantité de 15 à 87% en, poids,
le composé B) en une quantité de 10 à 82% en poids,
le composé C) en une quantité de 0,5 à 30% en poids,
le composé D) en une quantité de 0,5 à 10% en poids,
le composé E) en une quantité de 2 à 15% en poids,
le composé F) en une quantité de 0 à 50% en poids.

3. Masses moulables thermoplastiques ignifuges selon les revendications 1 à 2, **caractérisées en ce qu'**un poly (2,6-dialkyl-1,4-phénylène-éther) est mis en oeuvre en tant que composant A).

4. Masses moulables thermoplastiques ignifuges selon les revendications 1 à 3, **caractérisées en ce que** le polyphénylène-éther A) présente une masse moléculaire moyenne en masse ($M_w$) dans la gamme de 25 000 à 50 000 g/mole.

5. Masses moulables thermoplastiques ignifuges selon les revendications 1 à 4, **caractérisées en ce qu'**un polystyrène résistant aux chocs ayant 8 à 17% en poids de polybutadiène est mis en oeuvre en tant que composant B).

6. Masses moulables thermoplastiques ignifuges selon les revendications 1 à 5, **caractérisées en ce que** l'argile décolorante est mise en oeuvre en tant que phyllosilicate dans le composant D).

7. Masses moulables thermoplastiques ignifuges selon les revendications 1 à 6, **caractérisées en ce que** la teneur en composés azotés est de 0,1 à 20% en poids par rapport au composant D).

8. Utilisation des masses moulables selon les revendications 1 à 7 pour la préparation de corps moulés, fibres et feuilles, ignifuges.

9. Corps moulés, fibres et feuilles pouvant être obtenus à partir des masses moulables thermoplastiques ignifuges selon les revendications 1 à 7 en tant que composant essentiel.